# EUROPÄISCHE PATENTANMELDUNG

(11) **EP 3 045 839 A1**
(43) Veröffentlichungstag der Anmeldung: **20.07.2016**
(21) Anmeldenummer: 15197527.3
(22) Anmeldetag: 02.12.2015
(51) Int. Cl.: F24J 2/46, F24D 3/10

(54) **SOLARBEFÜLLSTATION**

(30) Priorität: 09.12.2014 DE 102014225257
(71) Anmelder: Vaillant GmbH, 42859 Remscheid (DE)
(72) Erfinder: Ruthenberg, Christian, 42399 Wuppertal (DE); Lüttgens, Kay-Bernd, 45145 Essen (DE); Bott, Stefan, 40625 Düsseldorf (DE); Severin, Sascha, 44791 Bochum (DE); van Wieringen, Bastiaan Alexander, 50668 Köln (DE); vom Stein, Jürgen, 42477 Radevormwald (DE); Schicke, Sven, 42553 Velbert (DE)
(74) Vertreter: Popp, Carsten

(57) **Zusammenfassung**

Die Erfindung betrifft eine Solarbefüllstation zum Befüllen einer Solaranlage mit einem Wärmeträgermedium (3) und zum Entlüften. Die Solarbefüllstation umfasst einen Behälter (2) für einen Vorrat des Wärmeträgermediums (3), eine Pumpe (5) und Anschlüsse (1) zum hydraulischen Verbinden der Solarbefüllstation mit der Solaranlage. Erfindungsgemäß umfasst die Solarbefüllstation ein Steuerungssystem (6), das mit einem Mittel zum Erfassen (10) des Typs der Solaranlage verbunden ist. In einem Datenbanksystem sind Betriebsparameter für die Solarbefüllstation zum Befüllen und/oder Entlüften verschiedener Solaranlagen speicherbar.

## Beschreibung

Die Erfindung betrifft eine Solarbefüllstation zum Befüllen eines hydraulischen Systems, insbesondere einer Solaranlage. Sie dient zum Spülen und Befüllen eines geschlossenen hydraulischen Systems mit einem Wärmeträgermedium ohne Luftblasen.

Eine gattungsgemäße Solarbefüllstation ist bekannt aus der Offenlegungsschrift DE 10 2010 052 683 A1. Sie umfasst im Wesentlichen einen Behälter für das Wärmeträgermedium und eine Pumpe und ist zum einfachen Transport in der Form einer Sackkarre aufgebaut. Die Solarbefüllstation ist mittels zweier Schläuche mit der Solaranlage verbindbar. Die Funktion einer gattungsgemäßen Solarbefüllstation ist in den Patentanmeldungen EP 2 213 951 A2 und EP 2 213 952 A2 erläutert. Nachdem die Solarbefüllstation über Schläuche an dem Kreislauf für das Wärmeträgermedium der Solaranlage angeschlossen ist, wird der Kreislauf bei der Inbetriebnahme, nach der Wartung oder zum Nachfüllen mit dem Wärmeträgermedium befüllt und gespült um möglichst die gesamte Luft aus dem Kreislauf zu verdrängen. Dazu muss die Pumpe vom Monteur für eine gewisse Zeit eingeschaltet werden.

Es ist dem Handwerker alleine überlassen, die Station korrekt anzuschließen und zu benutzen. Dabei kann es auftreten, dass Ventile nicht richtig verstellt werden oder das System nicht lange genug gespült wird, wodurch Fehler zu einem späteren Zeitpunkt auftreten können. Insbesondere wenn der Handwerker verschiedene Produkte installiert hat kann es leicht zu Bedienungsfehlern kommen, die zu einer Fehlfunktion oder zu Schäden führen können. Als Beispiel sei die Durchführung einer nicht vorgesehenen Dichtigkeitsprüfung genannt, die zu einem Austreten des Wärmeträgermediums führen kann.

Es ist daher Aufgabe der Erfindung, eine Solarbefüllstation bereitzustellen, die dem Handwerker hilft, Fehler zu vermeiden.

Diese Aufgabe wird erfindungsgemäß durch eine Solarbefüllstation gemäß den Merkmalen des unabhängigen Anspruchs gelöst. Dazu umfasst die erfindungsgemäße Solarbefüllstation in ihrem Steuerungssystem ein Datenbanksystem, in dem die Betriebsparameter für verschiedene Solaranlagen gespeichert sind. Um die Solaranlage zu erfassen, ist das Steuerungssystem mit einem Mittel verbunden, über das der Typ der Solaranlage erfasst werden kann. Dies kann entweder eine Eingabemöglichkeit für den Bediener sein oder ein Sensor, der beispielsweise einen Barcode oder ein Transponder ausliest, sein. Bevorzugt enthalten die Betriebsparameter des Datenbanksystems Werte für den Pumpendruck oder für das zu befüllende Wärmeträger-Volumen.

In einer Weiterbildung der Erfindung ist das Steuerungssystem mit einem Temperaturwächter der Solaranlage verbindbar. Beim Befüllen oder Entlüften wird die Temperatur überwacht und ein Überschreiten einer vorgegebenen Grenztemperatur vermieden.

Besonders bevorzugt ist die erfindungsgemäße Solarbefüllstation mit einem Mittel zum Fernbedienen ausgestattet. Dadurch kann der Bediener sich von der Solarbefüllstation entfernen und beispielsweise den Vorgang direkt an der Solaranlage überwachen und steuern.

Ein Anzeigemittel ist in einer Weiterbildung der Erfindung dafür vorgesehen, den Bediener Bedienungsanweisungen anzuzeigen und Hilfestellungen zu leisten. Dieses Anzeigemittel kann sowohl direkt an der Solarbefüllstation als auch an dem Bedienmittel vorgesehen sein. Es kann sich um ein grafisches oder alphanumerisches Display oder um Signallampen handeln. Auch ein akustisches Anzeigemittel zum Ausgeben eines Warn- oder Quittierungstons ist erfindungsgemäß eingeschlossen.

Darüber hinaus kann das Steuerungssystem mit einem Mittel zum Erzeugen eines Protokolls des Befüllens oder Entlüftens der Solaranlage verbunden sein. Dabei handelt es sich im einfachsten Fall um einen Drucker. Andere, insbesondere papierlose Protokolle können erfindungsgemäß ebenfalls erzeugt werden. Das Protokoll kann auch einfach in Form einer optischjen und/oder akustischen OK-/Fehleranzeige ausgegeben werden.

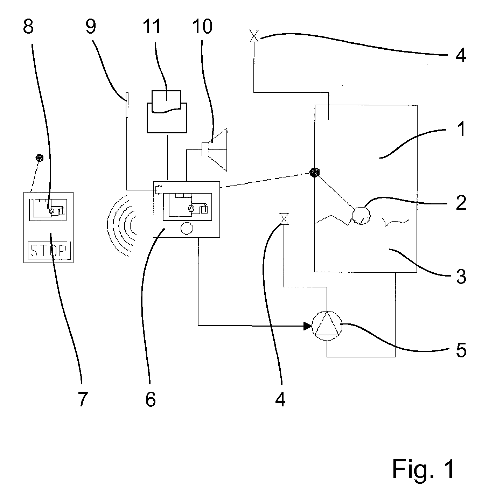

Die Erfindung wird nun anhand der Figur 1 detailliert erläutert. In Figur 1 ist schematisch eine erfindungsgemäße Solarbefüllstation dargestellt. Im wesentlichen umfasst die Solarbefüllstation einen Behälter 1 zur Aufnahme des Wärmeträgermediums 3 und eine Pumpe 5. Über Anschlüsse 4 ist die Solarbefüllstation mit dem Kreislauf einer Solaranlage verbindbar. Ein Steuerungssystem 6 überwacht mittels eines Schwimmers 2 den Füllstand des Behälters 1 und steuert die Pumpe 5 an. Ein Mittel zum Erfassen 10 des Typs der Solaranlage ist mit dem Steuerungssystem 6 verbunden. Dies kann eine Eingabemöglichkeit sein, mit der der Bediener den Typ der Solaranlage eingibt. Bevorzugt erfolgt dies jedoch automatisch, so dass Bedienfehler ausgeschlossen sind. Dabei kann es sich bei dem Mittel zum Einlesen 10 um einen Barcodescanner oder um einen Sensor zum Auslesen von Transpondern handeln. Dies ist besonders vorteilhaft, da so beispielsweise das Mittel zum Erfassen 10 direkt an einem der Anschlüsse 4 vorgesehen sein kann, wobei der auszulesende Transponder beispielsweise an dem Anschluss der Solaranlage vorgesehen ist.

Ein Temperaturwächter-Anschluss 9 ermöglicht die Verbindung des Steuerungssystems 6 mit dem Temperaturwächter der Solaranlage. Dies kann drahtgebunden oder drahtlos erfolgen.

Ebenfalls ist das Steuerungssystem 6 drahtgebunden oder bevorzugt drahtlos mit einem Bedienmittel 7 verbunden, mit dem Bedien-Eingaben des Bedieners entgegengenommen oder Anzeigen an den Bediener dargestellt werden.

### Bezugszeichenliste

- 1: Behälter
- 2: Schwimmer
- 3: Wärmeträgermedium
- 4: Anschluss Solaranlage
- 5: Pumpe
- 6: Steuerungssystem
- 7: Bedienmittel
- 8: Anzeigemittel
- 9: Temperaturwächter-Anschluss
- 10: Mittel zum Erfassen
- 11: Mittel zum Erzeugen eines Protokolls

## Patentansprüche

1. Solarbefüllstation zum Befüllen eines hydraulischen Systems, insbesondere einer Solaranlage, mit einem Wärmeträgermedium (3) und zum Entlüften, umfassend einen Behälter (2) für einen Vorrat des Wärmeträgermediums (3), eine Pumpe (5) und Anschlüsse (1) zum hydraulischen Verbinden der Solarbefüllstation mit der Solaranlage, **dadurch gekennzeichnet, dass** die Solarbefüllstation ein Steuerungssystem (6) umfasst, dass das Steuerungssystem mit einem Mittel zum Erfassen (10) des Typs der Solaranlage verbunden ist und dass das Steuerungssystem (6) ein Datenbanksystem umfasst, in welcher Betriebsparameter für die Solarbefüllstation zum Befüllen und/oder Entlüften verschiedener Solaranlagen speicherbar sind.

2. Solarbefüllstation nach Anspruch 1, **dadurch gekennzeichnet, dass** das die Betriebsparameter des Datenbanksystems Werte für Pumpendruck und/oder zu befüllendes Wärmeträger-Volumen enthalten und dass im Betrieb das Steuerungssystem (6) die Pumpe (5) so steuert, dass die Betriebsparameter für Druck und/oder Volumen eingehalten werden.

3. Solarbefüllstation nach Anspruch 1 oder 2, **dadurch gekennzeichnet, dass** das Steuerungssystem (6) mittels eines Temperaturwächter-Anschlusses (9) mit einem Temperaturwächter der Solaranlage verbindbar ist und das Steuerungssystem (6) so ausgelegt ist, dass beim Befüllen oder Entlüften die Temperatur überwacht wird und beim Überschreiten einer vorgegebenen Grenztemperatur der der Vorgang gestoppt wird.

4. Solarbefüllstation nach einem der Ansprüche 1 bis 3, **dadurch gekennzeichnet, dass** die Solarbefüllstation ein Bedienmittel (7) umfasst und dass das Bedienmittel (7) drahtlos verbunden oder in Form einer drahtgebundenen Fernbedienung angeschlossen ist.

5. Solarbefüllstation nach einem der vorhergehenden Ansprüche, **dadurch gekennzeichnet, dass** das Steuerungssystem (6) und/oder das Bedienmittel (7) ein Anzeigemittel (8) zur Anzeige von Bedienungsanweisungen umfasst.

6. Solarbefüllstation nach einem der vorhergehenden Ansprüche, **dadurch gekennzeichnet, dass** das Steuerungssystem (6) mit einem Mittel zum Erzeugen eines Protokolls (11) über das Befüllen oder Entlüften der Solaranlage verbunden ist.
